# EUROPEAN PATENT APPLICATION

(11) **EP 1 835 226 A1**
(43) Date of publication of application: **19.09.2007**
(21) Application number: 05781941.9
(22) Date of filing: 06.09.2005
(51) Int. Cl.: F21V 13/02, F21V 11/14, F21V 5/04, G02B 3/00, G09F 19/18

(54) **LIGHTING EQUIPMENT AND LIGHTING SYSTEM**

(30) Priority: 13.12.2004 JP 2004360326
(71) Applicant: Harison Toshiba Lighting Corporation, Imabari-shi, Ehime 794-8510 (JP)
(72) Inventor: SENZAKI, Shigeru c/o HARISON TOSHIBA LIGHTING Corp, Imabari-shi, Ehime 7948510 (JP); ARAI, Toshiyuki c/o HARISON TOSHIBA LIGHTING Corp, Imabari-shi, Ehime 7948510 (JP); WAGATSUMA, Yuuji c/o HARISON TOSHIBA LIGHTING Corp, Imabari-shi, Ehime 7948510 (JP); INOUE, Hideo c/o HARISON TOSHIBA LIGHTING Corp, Imabari-shi, Ehime 7948510 (JP); MATSUBA, Yoshiak c/o HARISON TOSHIBA LIGHTING Corp, Imabari-shi, Ehime 7948510 (JP)
(74) Representative: Kramer - Barske - Schmidtchen
(86) International application number: PCT/JP2005/016305
(87) International publication number: WO 2006/064593

(57) **Abstract**

A light shielding mask 24 opposing to an entrance surface of a fly eye lens 23 is provided, and a transparent portion 25 is made open corresponding to each of lens portions 23b, respectively. Each transparent portion 25 is divided to be formed into a first transparent portion 25a allowing light for forming a projected image 101a on an upper stage of an illuminated surface 100a to enter the lens portions 23b and a second transparent portion 25b allowing light for forming a projected image 101b on an lower stage of the illuminated surface 100b to enter the lens portions 23b, and these are individually set, thereby a difference between an irradiation distance to each of the illuminated surface 100a, 100b due to a step can be complemented, individually.

## Description

### Technical Field

The present invention relates to a lighting device and a lighting system for irradiating a particular illuminated region with uniform illuminance with light emitted from a light source using a fly eye lens.

### Background Art

A lighting device for irradiating a predetermined region preferably irradiates an illuminated surface with uniform light having a predetermined shape, for example, a rectangular shape and the like. The irradiation of the uniform light having such a predetermined shape, for example, as disclosed in Japanese Patent Laid-Open No. 2001-337204, may be achieved by projecting light from a light source into a fly eye lens having a plurality of lens portions in matrix arrangement.

However, according to the technology disclosed in Japanese Patent Laid-Open No. 2001-337204 described above, when a lighting device irradiates an illuminated surface having a step with light, because there is a difference in irradiation distance between an upper stage and lower stage of the illuminated surface, a projected image formed on each of the stages of the illuminated surface is made distorted in shape relative to each other, resulting in an unattractive situation.

An object of the present invention is to provide a lighting device having a simple configuration and capable of irradiating an illuminated surface having a step without distortion with illumination light of uniform illuminance.

### Disclosure of the Invention

The present invention is made for a lighting device configured to irradiate an illuminated surface having a step with light from a preset fixed point, and the lighting device includes a fly eye lens having a plurality of lens portions configured to receive emitted light from a light source and project the emitted light onto a particular illuminated region in a manner that the emitted light is overlapped with each other, and a light shielding mask configured to oppose to the fly eye lens and have a transparent portion made open corresponding to each of the lens portions, respectively, wherein the transparent portion is divided to be formed into a first transparent portion allowing light for forming a projected image on an upper stage of the illuminated surface with the step to enter the lens portions and a second transparent portion allowing light for forming a projected image on a lower stage of the illuminated surface with the step to enter the lens portions, and the transparent portion of the first and second transparent portion is individually set depending on a distance to each stage of the illuminated surface.

### Brief Description of the Drawings

Fig. 1 is a cross-section view illustrating a substantial part of a lighting device, according to a first embodiment of the present invention;
Fig. 2 is an exploded perspective view illustrating a lighting device, according to the first embodiment of the present invention;
Fig. 3 is a plain view illustrating a light shielding mask, according to the first embodiment of the present invention;
Fig. 4 is an enlarged plain view illustrating a transparent portion made open to a light shielding mask, according to the first embodiment of the present invention;
Fig. 5 is a plain view illustrating relation between a lighting device and an illuminated surface, according to the first embodiment of the present invention;
Fig. 6 is an elevation view illustrating relation between a lighting device and an illuminated surface, according to the first embodiment of the present invention;
Fig. 7 is a perspective view illustrating a projected image formed on an illuminated surface by a lighting device, according to the first embodiment of the present invention;
Fig. 8 is an elevation view illustrating relation between a lighting device and an illuminated surface, according to a second embodiment of the present invention;
Fig. 9A is a plain view illustrating a light shielding mask, according to the second embodiment of the present invention;
Fig. 9B is a plain view illustrating a light shielding mask, according to the second embodiment of the present invention;
Fig. 10A is a perspective view illustrating a projected image formed on an illuminated surface by a lighting device, according to the second embodiment of the present invention;
Fig. 10B is a perspective view illustrating a projected image formed on an illuminated surface by a lighting device, according to the second embodiment of the present invention; and
Fig. 10C is a perspective view illustrating a projected image formed on an illuminated surface by a lighting device, according to the second embodiment of the present invention.

### Best Mode for Carrying Out the Invention

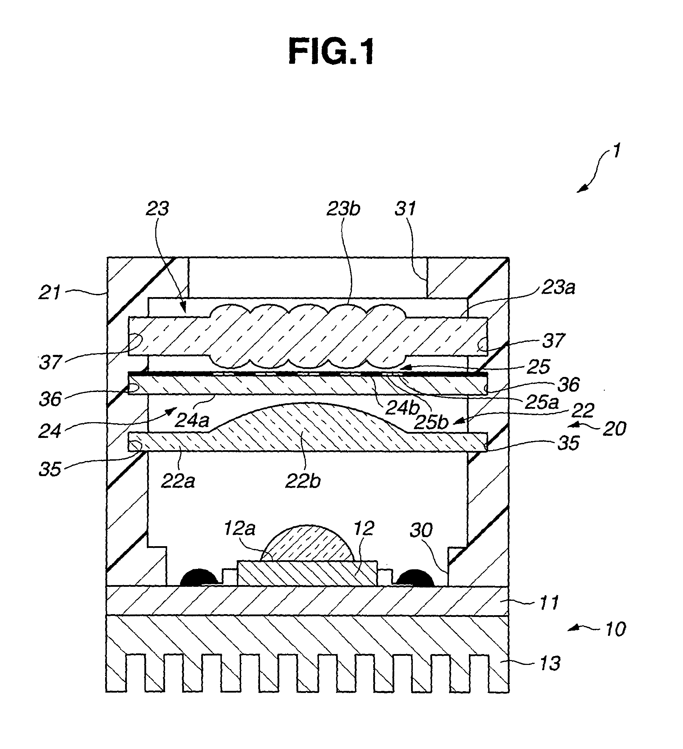

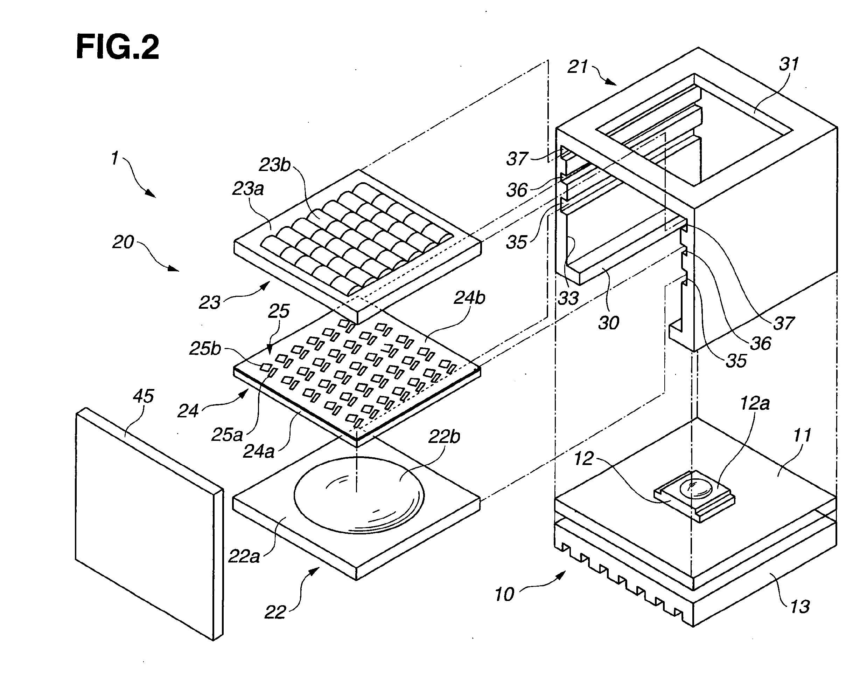

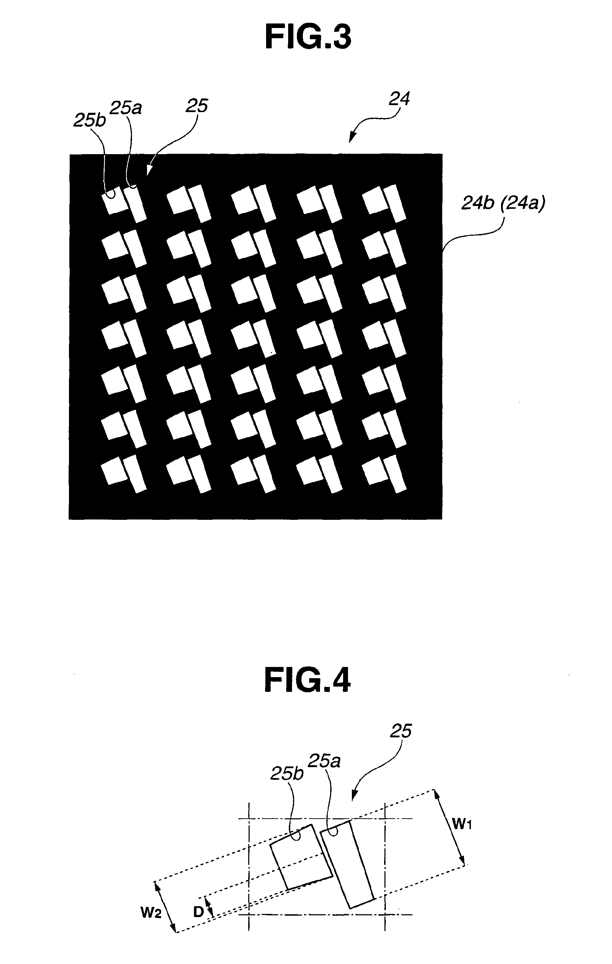

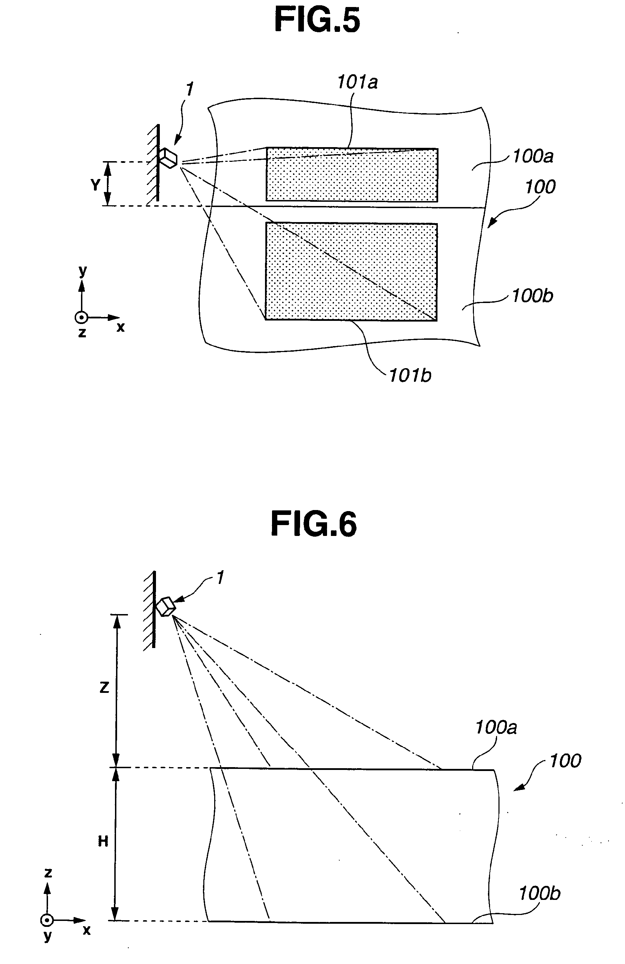

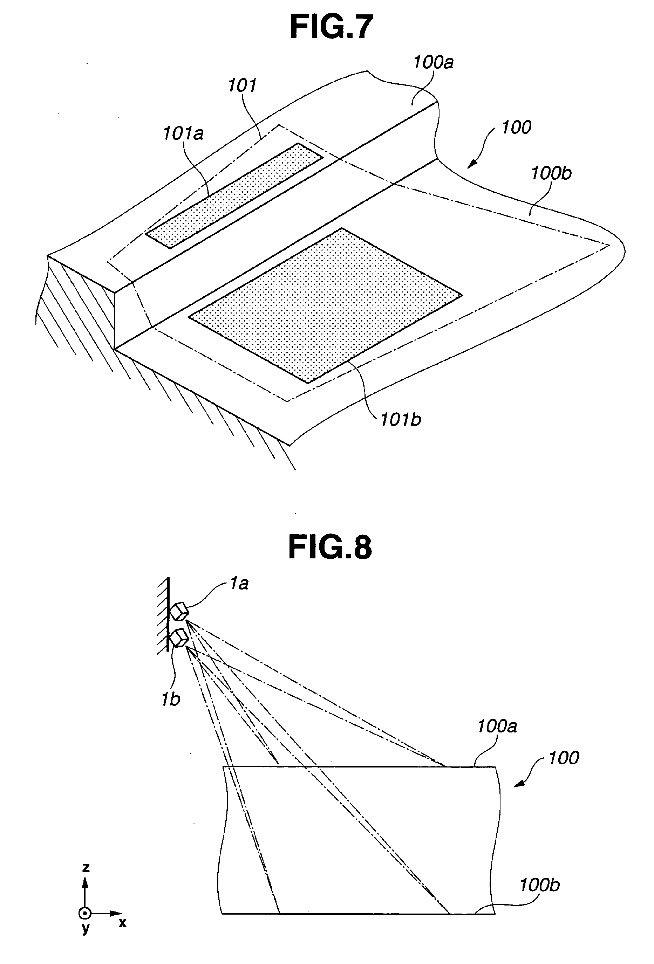

Now, an embodiment of the present invention will be described with reference to the accompanying drawings. Figs. 1 to 7 show a first embodiment of the present invention. Fig. 1 is a cross-section view illustrating a substantial part of a lighting device. Fig. 2 is an exploded perspective view illustrating the lighting device. Fig. 3 is a plain view illustrating a light shielding mask. Fig. 4 is an enlarged plain view illustrating a transparent portion made open to the light shielding mask. Fig. 5 is a plain view illustrating relation between the lighting device and an illuminated surface. Fig. 6 is an elevation view illustrating the relation between the lighting device and the illuminated surface. Fig. 7 is a perspective view illustrating a projected image formed on the illuminated surface by the lighting device.

In Figs. 5, 6, the numeral 1 designates a lighting device which, for example, in doors, irradiates an illuminated surface 100, such as a floor surface having a step, with light from a fixed position set in advance on a wall surface etc. Here, on the illuminated surface 100 of the present embodiment, a height H of the step from an upper stage 100a to a lower stage 100b of the illuminated surface (vertical difference in the z-axis direction in Figs. 5, 6) is, for example, 375 mm. Further, the fixed position relative to the illuminated surface 100 of the lighting device 1 of the present embodiment, for example, is situated at a vertical position Z of 630 mm from the upper stage 100a of the illuminated surface (distance in the z-axis direction in Figs. 5, 6) and, a distance Y between the edge of the upper stage 100a and the lower stage 100b of the illuminated surface (distance in the y-axis direction in Figs. 5, 6) is 120 mm. Further, an optical axis of the lighting device 1 is declined to be oriented to the edge direction, and for example, an angle α formed between the optical axis and the x-axis in the horizontal direction is 33° and an angle β formed downward between the optical axis and the x-axis is 69°.

As shown in Figs. 1, 2, the lighting device 1 includes, for example, a light source unit 10 having, as a light source, a surface-mounted light-emitting diode (LED) 12 with a single convex lens fixedly disposed on an emitting surface 12a thereof, and a lens optical system unit 20 to be disposed on top of the light source unit 10.

The light source unit 10 has an LED substrate 11. The LED substrate 11 holds the LED 12 on the substantially central portion thereof by means of soldering etc., and further electrically connects the held LED 12 to a power supply circuit not shown. Here, in order to improve luminous efficiency of the LED 12, a radiating fin 13 is fixedly provided on the backside of the LED substrate 11.

Further, the lens optical system unit 20 includes a lens housing 21 as well as a collimating lens 22 and a fly eye lens 23 housed and held in the lens housing 21. Further, the lens optical system unit 20 includes a light shielding mask 24 opposing to an entrance surface of the fly eye lens 23 in the lens housing 21.

As shown in Fig. 2, in the present embodiment, the lens housing 21 is in form of a substantially rectangular tube and an LED loading slot 30 is open into one end thereof in the optical axis direction. Further, an emitting aperture 31 for illumination light is open at a position opposing to the LED loading slot 30 in the other end of the lens housing 21 in the optical axis. Moreover, as shown in Fig. 1, when the lens housing 21 is disposed on top of the light source unit 10, the LED 12 is exposed to the inside of the lens housing 21 through the LED loading slot 30, causing the emitting surface 12a of the LED 12 to be opposed to the emitting aperture 31.

Further, the lens housing 21 includes a lens loading slot 33 open into one side thereof, as well as collimating lens hold grooves 35, light shielding mask hold grooves 36 and fly eye lens hold grooves 37, opposed to each other in this order from the LED loading slot 30 side in the inner surface of each of side walls adjacent to the lens loading slot 33.

The collimating lens 22 is, for example, a lens member configured by integrally forming a lens portion 22b on the emitting side of a lens substrate 22a in planar and substantially rectangular shape which is inserted and held into the collimating lens hold grooves 35. Then, the collimating lens 22 converts incident light from the LED 12 into substantially parallel light through the lens portion 22b to project.

The fly eye lens 23 is a lens member configured by integrally forming, in matrix arrangement, a plurality (for example, 5 × 7) of lens portions 23b having, for example, an entrance surface projecting downward and an emitting surface projecting upward on a lens substrate 23a in planar and substantially rectangular shape which is inserted and held into the fly eye lens hold grooves 37. Then, the fly eye lens 23 uniformly irradiates a particular illuminated region by overlapping incident light with each other which comes from the collimating lens 22 and enters each of the lens portions 23b, respectively. Here, in the present embodiment, each of the lens portions 23b, seen as planar, has, for example, a length of 3 mm and a breadth of 4.2 mm. Further, a distance across vertexes of each of the lens portions 23b is, for example, 8.3 mm. In addition, a refractive index is, for example, 1.492.

The light shielding mask 24 includes a transparent substrate 24a in planar and substantially rectangular shape which is inserted and held into the light shielding mask hold grooves 36, and a light shielding film 24b adhered on an emitting surface of the transparent substrate 24a. The light shielding mask 24 is adjacent and opposed to the entrance surface of the fly eye lens 23, and in the light shielding film 24b, a transparent portion 25 is made open at a position to which each of the lens portions 23b of the fly eye lens 23 corresponds.

Each transparent portion 25 is divided to be formed into a first transparent portion 25a allowing light for forming the projected image 101a on the upper stage of the illuminated surface 100a (see Figs. 5, 7) to enter each of lens portions 23b, and a second transparent portion 25b allowing light for forming the projected image 101b on the lower stage of the illuminated surface 100b (see Figs. 5, 7) to enter each of the lens portions 23b.

The first and second transparent portions 25a, 25b are shaped and arranged, for example, in a manner individually set by means of experiment and / or simulation etc. based on the step H between the illuminated surface 100a and 100b, the fix position (Y, Z, α, β etc.) of the lighting device 1, and each of dimensions of the lens portions 23b etc.

In the present embodiment, each transparent portion 25a, 25b is set so that the lighting device 1 forms the rectangular projected images 101a, 101b, on each of the stages 100a, 100b of the illuminated surface, which have the same width and are arranged on the same line with respect to one another. For this purpose, a shape of each transparent portion 25a, 25b is made substantially rectangular. A width W1, W2 of each transparent portion 25a, 25b has a different, individual value, respectively, and an opening position thereof also is set at a position so that a distance between centers has a predetermined distance D from each other (see Fig. 4). Specifically, each transparent portion 25a, 25b has the width, respectively, W1 = 2.48 mm, W2 = 1.52 mm. Further, the distance between centers is D = 0.69 mm. In addition, in Fig. 7 the numeral 100 shows a projected image formed when incident light on each of the lens portions 23b is not limited by the light shielding mask 24 of the present embodiment (i.e. when the light shielding mask 24 is not provided).

Further, now in Fig. 2, the numeral 45 designates which a side plate 45 blocks the lens loading slot 33 of the lens housing 21, for example, by means of adhesion of adhesive tape etc., after loading each lens 22, 23, and the light shielding mask 24 in the lens housing 21.

According to such embodiment, the light shielding mask 24 opposing to the entrance surface of the fly eye lens 23 is provided, and the transparent portion 25 is made open corresponding to each lens portion 23b, respectively, and further each of the transparent portions 25 is divided to be formed into the first transparent portion 25a allowing light for forming the projected image 101 a on the upper stage of the illuminated surface 100a to enter the lens portion 23b, and the second transparent portion 25b allowing light for forming the projected image 101b on the lower stage of the illuminated surface 100b to enter the lens portion 23b, and thereby, using a simple configuration, a difference between irradiation distances to the illuminated surface 100a, 100b due to the step can be complemented, respectively. Therefore, the first and second transparent portions 25a, 25b are suitably set, and whereby, the illuminated surface 100a, 100b having the step can be irradiated without distortion with light uniformized by the fly eye lens 23.

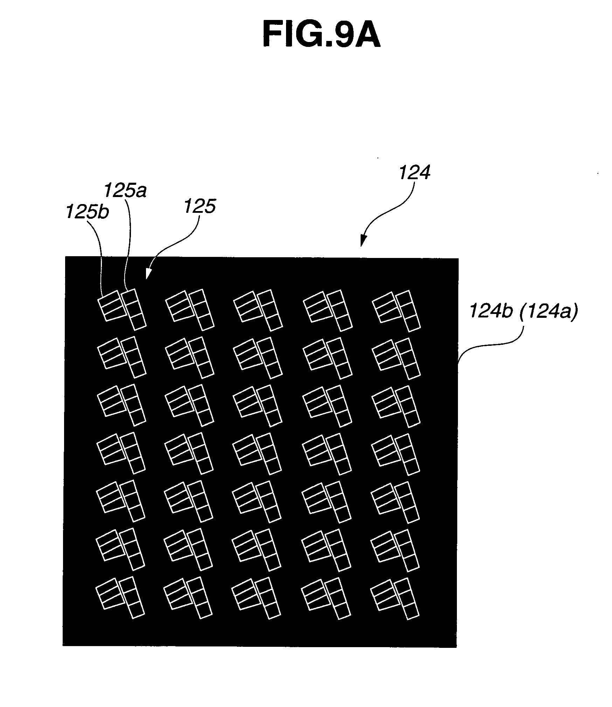

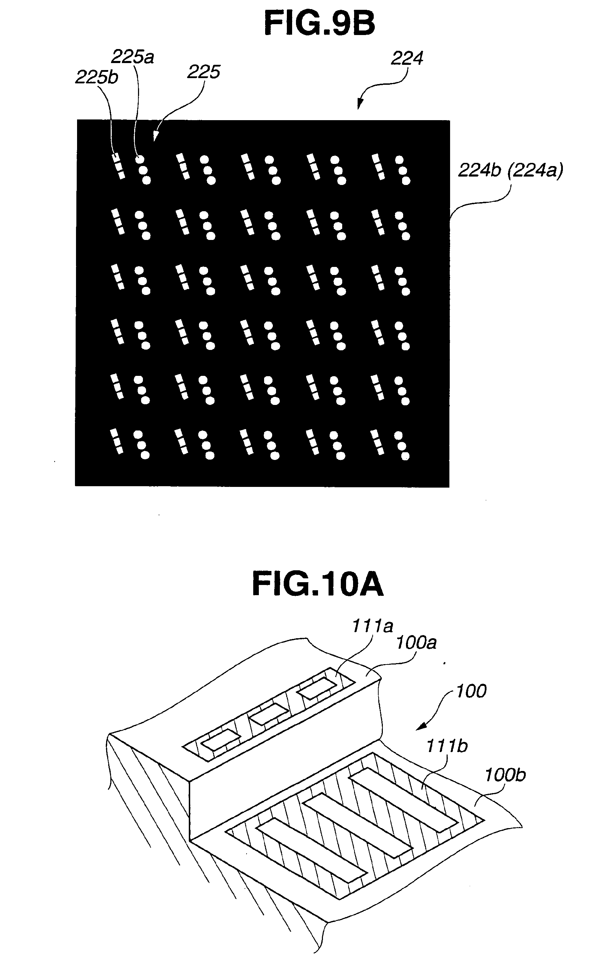

Next, Figs. 8 to 10C show a second embodiment of the present invention. Fig. 8 is an elevation view illustrating relation between a lighting device and an illuminated surface. Figs. 9A, B are plain views illustrating a light shielding mask. Figs. 10A to C are perspective views illustrating a projected image formed on an illuminated surface by a lighting device. In addition, in the present embodiment, a similar configuration as the first embodiment described above is denoted by a similar symbol and description thereof will be omitted.

The present embodiment is described as one example in which a plurality (for example, two) of the lighting devices 1a, 1b configured in a similar way to the first embodiment described above are used to form a lighting system, and emitted light from each lighting device 1a, 1b is overlapped with each other on the illuminated surface 100a, 100b (see Fig. 8).

Here, in the present embodiment, each lighting device 1a, 1b houses, as a light source, an LED 12 having a different, luminescent color from one another. For example, in the present embodiment, the lighting device 1a houses the LED 12 having a Cyan-base, luminescent color as a light source, and the lighting device 1b houses the LED 12 having an Umber-base, luminescent color.

As shown in Fig. 9A, a light shielding mask 124 constituting one of the lighting devices 1a includes a transparent substrate 124a and a light shielding film 124b adhered on the transparent substrate 124a. Further, an opening shape of a first and second transparent portion 125a, 125b constituting a transparent portion 125 on the light shielding film 124b may take an arbitrary pattern and shape.

On the one hand, as shown in Fig. 9B, a light shielding mask 224 constituting the other lighting device 1b includes, for example, a transparent substrate 224a and a light shielding film 224b adhered on the transparent substrate 224a. Further, an opening shape of a first and second transparent portion 225a, 225b constituting a transparent portion 225 on the light shielding film 224b may take an arbitrary pattern and shape.

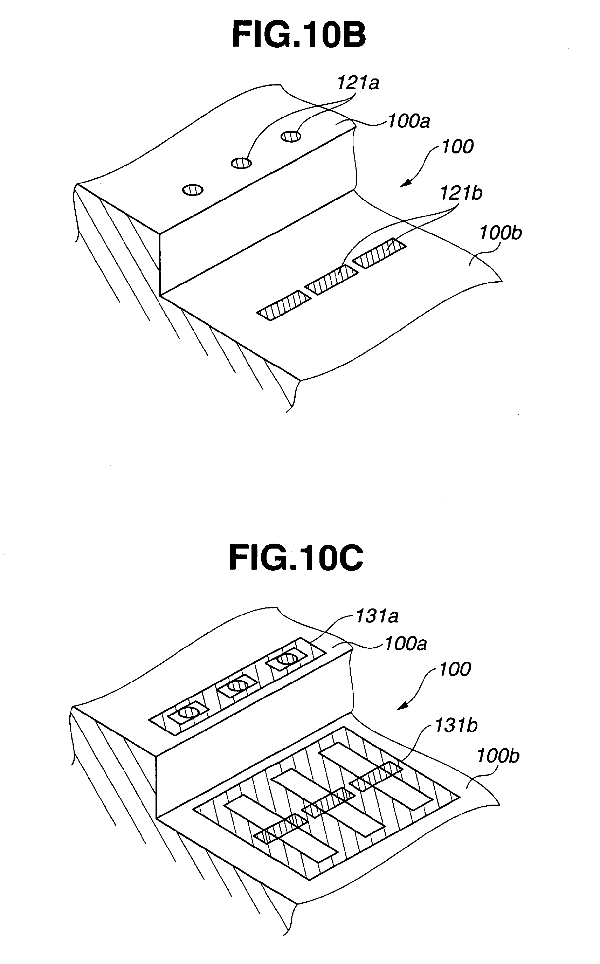

In such configuration, as shown in Fig. 10A, the lighting device 1 a forms a projected image 111a, 111b of a Cyan-base color having a predetermined pattern on each illuminated surface 100a, 100b. On the one hand, as shown in Fig. 10B, the lighting device 1b forms a projected image 121a, 121b of an Umber-base color having a different shape from those of the projected images 111 a, 111 b. Then, as shown in Fig. 10C, on each of the illuminated surface 100a, 100b, each pattern is synthesized by overlapping the projected image 111a with the projected image 121a, and the projected image 111b with the projected image 121b to form each of projected images 131a, 131b having regions of the Cyan-base color, the Umber-base color and a Green-base color.

According to such embodiment, the plurality of the lighting devices 1a, 1 b housing the LED 12 of a different, luminescent color and the light shielding mask 124, 225 formed in an arbitrary opening shape, respectively, are used to form a lighting system, and therefore the aesthetic projected image 131 a, 131 b can be formed on each of the illuminated surface 100a, 100b.

In addition, in the present embodiment, as a matter of course, the lighting devices 1a, 1b may be integrally formed.

Moreover, needless to say, the color of each LED and the shape of each transparent portion should not be limited to the aforementioned.

Further, in each embodiment, the projected image can be blinked by controlling a power supply circuit for supplying power to the LED 12.

Still further, in each embodiment, although the example using the surface-mounted LED as a light source has been described, the present invention should not be limited to this, and for example, a so-called "shell LED" in which a lens portion is integrally formed with a light emitting portion may be used as a light source, and moreover, needless to say, a HID lamp etc. may be used as a light source.

## Claims

1. A lighting device configured to irradiate an illuminated surface having a step with light from a preset fixed point, comprising:
a fly eye lens having a plurality of lens portions configured to receive emitted light from a light source and project the emitted light on a particular illuminated region in a manner that the emitted light is overlapped with each other, and
a light shielding mask configured to oppose to the fly eye lens and have a transparent portion made open corresponding to each of the plurality of lens portions, respectively, wherein
the transparent portion is divided to be formed into a first transparent portion allowing light for forming a projected image on an upper stage of the illuminated surface with the step to enter the lens portions and a second transparent portion allowing light for forming a projected image on a lower stage of the illuminated surface with the step to enter the lens portions, and the transparent portion of the first and second transparent portion is individually set depending on a distance to each stage of the illuminated surface.

2. The lighting device according to claim 1, wherein
the light source comprises a light source configured to emit light of a predetermined, luminescent color, and
the first and second transparent portion made open to the light shielding mask is formed in an arbitrary pattern and shape.

3. A lighting system,
comprising a plurality of lighting devices, each one of the plurality of lighting devices being a lighting device configured to irradiate an illuminated surface having a step with light from a preset fixed point, the lighting device comprising: a fly eye lens having a plurality of lens portions configured to receive emitted light from a light source and project the emitted light on a particular illuminated region in a manner that the emitted light is overlapped with each other; and a light shielding mask configured to oppose to the fly eye lens and have a transparent portion made open corresponding to each of the plurality of lens portions, respectively, wherein the transparent portion is divided to be formed into a first transparent portion allowing light for forming a projected image on an upper stage of the illuminated surface with the step to enter the lens portions and a second transparent portion allowing light for forming a projected image on a lower stage of the illuminated surface with the step to enter the lens portions, and the transparent portion of the first and second transparent portion is individually set depending on a distance to each stage of the illuminated surface,
wherein a fixed point for fixing each lighting device is set so that the emitted light is overlapped with each other on the illuminated surface.

4. The lighting system according to claim 3, wherein
a luminescent color of the light source in each lighting device is set to a different color from one another.

5. The lighting system according to claim 3, wherein
a pattern and shape of the first and second transparent portion in each lighting device is set to a different pattern and shape from one another.
